# EUROPÄISCHE PATENTSCHRIFT

(11) **EP 4 282 793 B1**
(45) Veröffentlichungstag und Bekanntmachung des Hinweises auf die Patenterteilung: **01.01.2025**
(21) Anmeldenummer: 23175328.6
(22) Anmeldetag: 25.05.2023
(51) Int. Cl.: B65G 54/02

(54) **PRODUKTHANDHABUNGSVORRICHTUNG, PRODUKTHANDHABUNGSSYSTEM, VERPACKUNGSMASCHINE SOWIE VERFAHREN ZUR HANDHABUNG VON PRODUKTEN**
PRODUCT HANDLING DEVICE, PRODUCT HANDLING SYSTEM, PACKAGING MACHINE AND METHOD FOR HANDLING PRODUCTS
DISPOSITIF DE MANIPULATION DE PRODUITS, SYSTÈME DE MANIPULATION DE PRODUITS, MACHINE D'EMBALLAGE ET PROCÉDÉ DE MANIPULATION DE PRODUITS

(30) Priorität: 25.05.2022 DE 102022113317
(43) Veröffentlichungstag der Anmeldung: 29.11.2023
(73) Patentinhaber: Syntegon Packaging Technology GmbH, 73630 Remshalden (DE)
(72) Erfinder: Vaihinger, Bernhard, 71384 Weinstadt (DE)
(74) Vertreter: Novagraaf Group

(56) Entgegenhaltungen:
- DE-A1- 102015 209 613
- DE-A1- 102015 209 618
- US-B1- 6 453 649

## Beschreibung

### Stand der Technik

Die Erfindung betrifft eine Produkthandhabungsvorrichtung nach dem Oberbegriff des Anspruchs 1, ein Produkthandhabungssystem nach Anspruch 11, eine Verpackungsmaschine nach Anspruch 12 und ein Verfahren zur Handhabung von Produkten nach Anspruch 13.

Aus dem Stand der Technik, beispielsweise aus der Druckschrift EP 3303197 B1, ist bereits eine Produkthandhabungsvorrichtung nach dem Oberbegriff des Anspruchs 1 bekannt. Zuteilungen und Sortierungen von einzelnen Produkten aus Zuführspuren bzw. Produktzuführbändern erfolgen bislang mittels geschwindigkeitsgesteuerter Förderbänder, wobei die Förderbänder beispielsweise übereinander angeordnet sein können. Ferner ist aus der genannten Druckschrift bekannt Mover zumindest zweitweise oberhalb von zumindest einer Zuführspur zu bewegen, um zumindest ein Produkt aus jener Zuführspur aufzunehmen und weiter zu transportieren, wobei jeder Mover separat dazu vorgesehen ist, zumindest ein Produkt aufzunehmen und zu bewegen. Bei Überlappungen von Zuführspuren und/oder Abführspuren und/oder bei Bewegungen des Movers über die Zu- und/oder Abführspur können Verunreinigungen und/oder Verschmutzungen in/an dem Produkt auftreten, sodass derartig bekannte Anordnungen und Vorrichtungen aus dem Stand der Technik bislang eher ungeeignet für hygienische Produkte, wie beispielsweise medizinische Produkte, sind. Ferner können bekannte Produkthandhabungsvorrichtungen aus dem Stand der Technik, insbesondere Vereiniger zur Sortierung von mehreren Produkten aus mehreren Zuführbahnen, welche teilweise sehr komplexe Systeme ausbilden können, lediglich mit einer begrenzten Leistung und Geschwindigkeit betrieben werden.

Ferner sind aus DE 10 2015 209 618 A1 ,die auch den Oberbegriff des Anspruchs 1 offenbart, und DE 10 2014 106 400 A1 bereits Verpackungsmaschinen mit einem Produkthandhabungssystem zur Handhabung, insbesondere zur Förderung und/oder Sortierung, von Produkten bekannt, wobei das Produkthandhabungssystem eine Produkthandhabungsvorrichtung, zumindest eine Produktzuführeinheit und zumindest eine Produktabführeinheit umfasst. Die Produkthandhabungsvorrichtung umfasst zur Handhabung, insbesondere zur Förderung und/oder Sortierung, von Produkten eine Vielzahl von Movern und eine Steuereinheit zur Ansteuerung der Mover, wobei die Steuereinheit dazu vorgesehen ist, in zumindest einem Betriebszustand zumindest zwei der Mover zu einer gemeinsamen Auflage für zumindest ein Produkt zusammenzufassen.

Des Weiteren sind aus US 6 453 649 B1 und DE 10 2015 209 613 A1 ebenfalls bereits Verpackungsmaschinen mit einem Produkthandhabungssystem zur Handhabung, insbesondere zur Förderung und/oder Sortierung, von Produkten bekannt, wobei das Produkthandhabungssystem eine Produkthandhabungsvorrichtung, zumindest eine Produktzuführeinheit und zumindest eine Produktabführeinheit umfasst.

Die Aufgabe der Erfindung besteht insbesondere darin, eine gattungsgemäße Vorrichtung, ein gattungsgemäßes System, eine gattungsgemäße Maschine und ein gattungsgemäßes Verfahren mit verbesserten Eigenschaften hinsichtlich einer Effizienz bei einer Handhabung von Produkten bereitzustellen. Die Aufgabe wird erfindungsgemäß durch die Merkmale der Ansprüche 1, 11, 12 und 13 gelöst, während vorteilhafte Ausgestaltungen und Weiterbildungen der Erfindung den Unteransprüchen entnommen werden können.

### Offenbarung der Erfindung

Die Erfindung geht aus von einer Produkthandhabungsvorrichtung zur Handhabung, insbesondere zur Förderung und/oder Sortierung, von Produkten, mit einer Vielzahl von Movern, mit einer Steuereinheit zur Ansteuerung der Mover und mit einer Basiseinheit, die eine Ebene ausbildet, bezüglich welcher die Mover bewegbar angeordnet und/oder gelagert sind, wobei die Steuereinheit dazu vorgesehen ist, in zumindest einem Betriebszustand zumindest zwei der Mover zu einer gemeinsamen Auflage für zumindest ein Produkt zusammenzufassen, wobei die Steuereinheit dazu vorgesehen ist, die zumindest zwei Mover in dem Betriebszustand von zumindest einer Produktzuführeinheit zu zumindest einer Produktabführeinheit zu bewegen.

Es wird vorgeschlagen, dass die Steuereinheit dazu vorgesehen ist, eine Geschwindigkeit der zumindest zwei Mover bei Annäherung an die Produktabführeinheit zu verändern, wobei mittels der Änderung der Geschwindigkeit der zumindest zwei Mover eine trägheitsbedingte Übergabe zumindest des Produkts von zumindest den zwei Movern an die Produktabführeinheit realisierbar ist.

Durch eine derartige Ausgestaltung kann eine Effizienz bei Handhabungen von Produkten gesteigert werden. Ferner können Förderungen und/oder Sortierungen von Produkten effizienter, und zwar schneller, komfortabler und störungsfreier realisiert werden. Zudem kann eine Leistung und/oder eine Geschwindigkeit eines gesamten Produkthandhabungsprozesses verbessert, und zwar gerade eine Geschwindigkeit bei Förderung und/oder Überführung sowie Sortierung der Produkte erhöht werden. Somit kann eine Förderungszeit, eine Transportzeit und/oder eine Sortierungszeit pro Produkt und/oder pro Produkthandhabungsprozess verringert werden. Außerdem kann eine Sicherheit bei Förderung und/oder Sortierung von Produkten verbessert werden, da mit Zusammenfassung von zumindest zwei Movern, eine ausreichend große Auflage für zumindest das Produkt bereitstellbar ist, um das Produkt sicher und effizient zu fördern und/oder zu transportieren. Darüber hinaus kann ein hohes Maß an Flexibilität bereitgestellt sowie ein Komfort gesteigert werden, da in Abhängigkeit von einer Größe und/oder Form und/oder Ausgestaltung des zu handhabenden Produkts zumindest die zwei Mover oder möglicherweise auch noch zusätzliche Mover zu einer gemeinsamen Auflage für das Produkt zusammengefasst werden können. Damit können Förderungen und/oder Sortierungen von einer großen Bandbreite an unterschiedlichen Produkten realisiert und/oder ermöglicht werden. Des Weiteren kann eine Kosten- und/oder eine Produkt- und/oder Betriebs- und/oder eine Arbeitseffizienz gesteigert werden, da auf eine komplexe Vorrichtung zur Förderung und/oder Sortierung von Produkten verzichtet werden kann. Zudem können Kollisionen, beispielsweise Zusammenstöße, von Movern untereinander vermieden und damit wiederum eine Effizienz, hinsichtlich einer Führung der Mover, gesteigert werden. Des Weiteren kann eine Abgabe bzw. Übergabe von Produkten an eine Produktabführeinheit verbessert und effizienter gestaltet werden. Ferner kann eine vorteilhaft einfache Übergabe von Produkten an die Produktabführeinheit realisiert und/oder bereitgestellt werden. Zudem können Kollisionen von Movern bei Annäherung an die Produktabführeinheit verringert und/oder verhindert werden. Außerdem können damit die Abgabegeschwindigkeiten von Produkten an die Produktabführeinheit gesteuert und/oder geregelt werden, und zwar bevorzugt in Abhängigkeit von einer Fördergeschwindigkeit der Produkte auf zumindest der Produktzuführeinheit und/oder Produktabführeinheit.

Die Produkthandhabungsvorrichtung ist dazu vorgesehen, Produkte zu handhaben, und zwar beispielsweise zu fördern, zu bewegen, zu transportieren, zu sortieren und/oder zu überführen. Vorzugsweise ist die Produkthandhabungsvorrichtung eine Unterbaugruppe eines Produkthandhabungssystems. Es wäre jedoch auch denkbar, dass die Produkthandhabungsvorrichtung das gesamte Produkthandhabungssystem umfasst. Das Produkthandhabungssystem ist, ohne darauf beschränkt zu sein, zur Handhabung, insbesondere zur Förderung und/oder Transportierung und/oder Sortierung, von Produkten vorgesehen und kann weitere, einem Fachmann als sinnvoll erscheinende Vorrichtungen und/oder Einheiten umfassen, die zur Handhabung von Produkten nutzbar und sinnvoll sind. Möglicherweise ist das Produkt unverpackt, insbesondere ein unverpacktes Lebensmittel, wie beispielsweise ein Apfel, eine Birne oder dergleichen. Besonders bevorzugt handelt es sich bei dem Produkt um ein zumindest teilweise verpacktes Produkt, wobei das Produkt zumindest eine Verpackung und ein in der Verpackung angeordnetes Füllgut aufweist. Bei dem Füllgut kann es sich beispielsweise um ein festes, flüssiges, pastöses und/oder stückiges Füllgut handeln. Ferner kann das Produkt beispielsweise ein Lebensmittel, ein pharmazeutisches Produkt, ein Bedarfsgut, ein Beauty- und/oder Körperpflegeprodukt sein, wie beispielsweise Chips, Soßen, Milchprodukte, insbesondere Joghurts, Brotaufstriche, Pasten, Fertiggerichte, Süßwaren, Cremes, und/oder Shampoos oder dergleichen sein. Denkbar wäre auch, dass das Produkt ein Bedarfsgut und/oder Gegenstand aus dem Bereich Spielwaren, Handwerken, Küche und/oder Haushalt oder dergleichen ist, wie beispielsweise ein Spielzeugauto, eine Schöpfkelle, ein Topf, ein Elektrokleingerät, beispielsweise ein Mixer und/oder eine Küchenwaage, und/oder eine Schraube. Bei dem Produkt kann es sich um ein jegliches denkbares und dem Fachmann als sinnvoll erscheinendes Produkt handeln.

Ferner kann das Produkthandhabungssystem Teil einer Verpackungsmaschine sein. Die Verpackungsmaschine ist, ohne darauf beschränkt zu sein, vorzugsweise zu einer Abfüllung, Verpackung, Umverpackung und/oder Verschließung von Füllgütern, insbesondere Lebensmitteln, vorgesehen. Die Verpackungsmaschine kann zusätzlich zum Produkthandhabungssystem eine Vielzahl an weiteren Vorrichtungen und/oder Einheiten und/oder Systemen zur Be- und/oder Verarbeitung und/oder Dosierung und/oder Lagerung und/oder Verpackung von Füllgütern, die ein Fachmann für sinnvoll erachtet, aufweisen, wie beispielsweise eine Umformvorrichtung für Verpackungen, eine Schneidvorrichtung, eine Dosiervorrichtung, eine Abfüllvorrichtung, eine Lagervorrichtung, eine Sterilisationsvorrichtung, eine Verschlussvorrichtung, eine Umverpackungsvorrichtung oder dergleichen.

Mittels zumindest der zwei Mover können Produkte bewegt, transportiert, sortiert und/oder überführt werden. Insbesondere sind die Mover, bevorzugt alle Mover der Vielzahl von Movern, als elektrodynamisch bewegliche Mover ausgebildet. Vorteilhaft weist die Produkthandhabungsvorrichtung eine Basiseinheit auf. Die Basiseinheit kann eine Basis und/oder eine Ebene ausbilden, bezüglich welcher die Mover, insbesondere die zumindest zwei Mover und bevorzugt alle Mover der Vielzahl von Movern, bewegbar angeordnet und/oder gelagert sind. Vorzugsweise weist die Produkthandhabungsvorrichtung zumindest eine Antriebseinheit, insbesondere eine elektrodynamische Antriebseinheit, auf, mittels welcher die Mover bewegbar sind. Die Antriebseinheit kann zumindest teilweise, insbesondere in Höhenrichtung betrachtet, unterhalb der Basiseinheit angeordnet sein. Insbesondere sind die Mover relativ zu der Basiseinheit bewegbar, und zwar mittels der Antriebseinheit antreibbar. Die Antriebseinheit erzeugt bevorzugt in zumindest einem Betriebszustand, insbesondere zumindest dem bereits genannten Betriebszustand und/oder in weiteren Betriebszuständen, und zwar in zumindest einem aktivierten Zustand elektromagnetische Kräfte, insbesondere ein elektromagnetisches Wechselfeld, für einen Antrieb der Mover. Mittels der Antriebseinheit ist vorzugsweise eine auf die Mover wirkende Antriebskraft erzeugbar, insbesondere um eine Bewegung, bevorzugt eine Translationsbewegung und/oder eine Rotationsbewegung, der Mover relativ zu der Basiseinheit zu erzeugen und/oder hervorzurufen. Die Mover können in zumindest zwei Freiheitsgraden relativ zu der Basiseinheit verschiebbar und/oder drehbar sein. Denkbar wäre jedoch auch, dass die Mover relativ zu der Basiseinheit kippbar und/oder in zumindest einem dritten Freiheitsgrad relativ zu der Basiseinheit bewegbar sind. Vorzugsweise sind die Mover zumindest im Wesentlichen parallel zu der Basiseinheit bewegbar, und zwar in einer zu der Basiseinheit parallel verlaufenden Bewegungsebene. Bevorzugt ist die Antriebseinheit dazu vorgesehen, die Mover zu Bewegungen anzutreiben, die zumindest im Wesentlichen parallel zu der Basiseinheit verlaufen. Unter "im Wesentlichen parallel" soll hierbei eine Ausrichtung einer Richtung relativ zu einer Bezugsrichtung, insbesondere in einer Ebene, verstanden werden, wobei die Richtung gegenüber der Bezugsrichtung eine Abweichung kleiner als 8°, vorteilhaft kleiner als 5° und besonders vorteilhaft kleiner als 2° aufweist.

Die Basiseinheit kann zumindest ein plattenförmiges Element aufweisen oder als ein solches ausgebildet sein. Darunter, dass ein Objekt "plattenförmig" ausgestaltet ist, soll ein räumliches Objekt verstanden werden, das, in einer Abwicklung in einer Ebene betrachtet, in einem Querschnitt senkrecht zur Ebene betrachtet eine unrunde Querschnittsfläche und eine insbesondere zumindest im Wesentlichen gleichbleibende Materialstärke aufweist, die weniger als 50 %, vorzugsweise weniger als 25 % und besonders bevorzugt weniger als 10 % einer Flächenerstreckung des räumlichen Objekts parallel zur Ebene, insbesondere einer kleinsten Flächenerstreckung des Objekts parallel zur Ebene beträgt. Ferner soll darunter verstanden werden, dass zumindest ein kleinstmöglicher geometrischer Quader, welcher das Objekt gerade noch vollständig umschließt, plattenförmig ist. Vorzugsweise sind die Mover zumindest im Wesentlichen parallel zu dem plattenförmigen Element bewegbar.

Vorteilhaft umfassen die Mover jeweils zumindest ein Magnetfelderzeugungselement zu einer Erzeugung eines Magnetfelds. Das Magnetfelderzeugungselement ist beispielsweise als ein Magnet, insbesondere als ein Permanentmagnet, oder dergleichen ausgebildet. Insbesondere ist das Magnetfelderzeugungselement dazu vorgesehen, zum Antrieb des Movers mit der Antriebseinheit zusammenzuwirken. Beispielsweise erzeugt ein Zusammenwirken des Magnetfelderzeugungselements mit der Antriebseinheit einen Luftspalt zwischen der Basiseinheit und dem Mover. Der Mover kann in einem Abstand von beispielsweise zumindest 1 mm, vorteilhaft zumindest 3 mm und bevorzugt zumindest 5 mm in Höhenrichtung betrachtet oberhalb der Basiseinheit schweben. Alternativ ist jedoch auch denkbar, dass die Antriebseinheit als ein fluidbasierter Planarantrieb ausgebildet ist. Vorzugsweise gelten die Beschreibungen des Movers, insbesondere bezüglich eines Antriebs durch die Antriebseinheit, analog für zumindest die zwei Mover und bevorzugt für alle weiteren Mover der Vielzahl von Movern.

Insbesondere ist die Steuereinheit dazu vorgesehen, die Antriebseinheit anzusteuern, um die Mover bezüglich der Basiseinheit zu bewegen. Die Steuereinheit ist ferner zu einer Steuerung und/oder Regelung zumindest einer Bewegung der Mover vorgesehen. Unter einer "Steuereinheit" soll eine elektronische Einheit verstanden werden, die vorzugsweise in einer Steuer- und/oder Regeleinheit des Produkthandhabungssystems zumindest teilweise integriert ist und die dazu vorgesehen ist, zumindest eine Bewegung der Mover zu steuern und/oder zu regeln. Vorteilhaft umfasst die Steuereinheit eine Recheneinheit, insbesondere einen Prozessor, und bevorzugt zusätzlich zur Recheneinheit eine Speichereinheit mit einem darin gespeicherten Steuer- und/oder Regelprogramm, das dazu vorgesehen ist, von der Recheneinheit ausgeführt zu werden. Die Speichereinheit kann als digitales Speichermedium, beispielsweise als eine Festplatte oder dergleichen, ausgebildet sein.

Die Steuereinheit kann in zumindest dem Betriebszustand zumindest zwei der Mover derart ansteuern, dass die zumindest zwei Mover nebeneinander angeordnet sind und somit gemeinsam die Auflage für zumindest das Produkt bilden. Bevorzugt bewegen sich die zumindest zwei Mover in zumindest dem Betriebszustand gemeinsam bezüglich der Basiseinheit, insbesondere in Höhenrichtung betrachtet oberhalb der Basiseinheit. In zumindest dem Betriebszustand kann zumindest das Produkt auf der Auflage der zumindest zwei Mover angeordnet sein. Bevorzugt bilden die Mover jeweils zu gleichen Teilen die Auflage für zumindest das Produkt aus. Denkbar wäre auch, dass ein erster der Mover beispielsweise zumindest 20 %, vorteilhaft zumindest 30 %, vorzugsweise zumindest 40 %, der Auflage bereitstellt und/oder ausbildet. Ein zweiter der Mover kann entsprechend beispielsweise zumindest 60 %, vorteilhaft zumindest 70 %, vorzugsweise zumindest 80 %, der Auflage bereitstellen und/oder ausbilden. Die zumindest zwei Mover könnten in zumindest dem Betriebszustand kontaktbündig nebeneinander angeordnet sein, um insbesondere eine durchgängige und ebene Auflage für zumindest das Produkt zu bilden. Alternativ könnten die zumindest zwei Mover beabstandet zueinander gemeinsam die Auflage bilden. Beispielsweise könnte ein Abstand zwischen den zumindest zwei Movern in zumindest dem Betriebszustand zumindest 0,5 mm, insbesondere zumindest 2 mm, vorteilhaft zumindest 5 mm und bevorzugt höchstens 5 cm, insbesondere höchstens 3 cm und besonders bevorzugt höchstens 1 cm betragen.

Es wäre auch denkbar, dass die Steuereinheit in zumindest dem Betriebszustand dazu vorgesehen ist, zusätzlich noch weitere Mover zu den zumindest zwei Movern zu einer gemeinsamen Auflage für das Produkt zusammenzufügen, wie beispielsweise zumindest vier Mover oder zumindest sechs Mover. Die Steuereinheit könnte eine gerade oder eine ungerade Anzahl an Movern zusammenfügen. Bevorzugt kann die Steuereinheit in zumindest dem Betriebszustand je nach Produktart und/oder Produktform und/oder Produktgröße und/oder Produktausgestaltung eine beliebige Anzahl an Movern, jedoch stets zumindest zwei Mover, zu einer gemeinsamen Auflage für das Produkt zusammenfassen und/oder zusammenfügen.

Im vorliegenden Dokument dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts". Ferner soll unter "vorgesehen" hier und im Folgenden speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass die Steuereinheit dazu vorgesehen ist, die zumindest zwei Mover in dem Betriebszustand von zumindest einer Produktzuführeinheit zu zumindest einer Produktabführeinheit zu bewegen. Dadurch kann eine effiziente Handhabung, und zwar zumindest eine Förderung und/oder Sortierung von Produkten zwischen zumindest einer Produktzuführeinheit und zumindest einer Produktabführeinheit bereitgestellt und/oder ermöglicht werden. Ferner können Handhabungen, und zwar Förderungen und/oder Sortierungen von Produkten effizienter, und zwar schneller, komfortabler und/oder störungsfreier realisiert werden. Außerdem können bei mehreren Produktzuführeinheiten, beispielsweise bei zumindest zwei Produktzuführeinheiten Produkte, bevorzugt unterschiedliche Produkte, aus den jeweiligen Produktzuführeinheiten miteinander vereinigt und/oder sortiert werden, und zwar auf effiziente Art und Weise.

Vorzugsweise sind zumindest die Produktzuführeinheit und zumindest die Produktabführeinheit Teil des Produkthandhabungssystems. Insbesondere ist die Produkthandhabungsvorrichtung dazu vorgesehen, Produkte von zumindest der Produktzuführeinheit zu zumindest der Produktabführeinheit zu überführen und/oder zu transportieren. Bei der Produktzuführeinheit und/oder der Produktabführeinheit kann es sich beispielsweise um Transportbänder und/oder Förderbänder und/oder Fließbänder handeln. Das Produkthandhabungssystem kann mehrere Produktzuführeinheiten, beispielsweise zumindest zwei Produktzuführeinheiten aufweisen. Die Produktzuführeinheiten können unterschiedliche Produkte zuführen. Beispielsweise kann aus einer ersten Produktzuführeinheit der Produktzuführeinheiten ein erstes Produkt und/oder aus einer zweiten Produktzuführeinheit der Produktzuführeinheiten ein zweites Produkt zuführbar sein. Das erste Produkt und das zweite Produkt können gleiche oder bevorzugt unterschiedliche Produkte sein. Besonders bevorzugt ist die Produkthandhabungsvorrichtung dazu vorgesehen, Produkte aus den zumindest zwei Produktzuführeinheiten zusammenzuführen und insbesondere gemeinsam zu der Produktabführeinheit zu fördern und/oder zu überführen, sodass die Produkte von der Produktabführeinheit abführbar sind. Ferner kann die Produkthandhabungsvorrichtung dazu vorgesehen sein, die, insbesondere unterschiedlichen, Produkte aus den zumindest zwei Produktzuführeinheiten zu sortieren und bevorzugt in einer bestimmten und vordefinierten Reihenfolge, beispielsweise abwechselnd, zur Produktabführeinheit zu fördern und/oder zu überführen.

Insbesondere in zumindest dem Betriebszustand ist die Steuereinheit dazu vorgesehen, die zumindest zwei Mover gemeinsam von zumindest der Produktzuführeinheit zu der Produktabführeinheit zu bewegen. Die zumindest zwei Mover können zumindest das Produkt von zumindest der Produktzuführeinheit übernehmen und/oder auf der Auflage aufnehmen und gemeinsam zu der Produktabführeinheit transportieren.

In einem Übergabebereich können die zumindest zwei Mover das Produkt von der Produktzuführeinheit übernehmen und/oder aufnehmen. Bevorzugt befindet sich der Übergabebereich außerhalb der Produktzuführeinheit. Die Steuereinheit kann die zumindest zwei Mover bei Übergabe des Produkts in dem Übergabebereich anordnen, wobei die zumindest zwei Mover vorteilhaft beabstandet zu der Produktzuführeinheit anordenbar sind. Zumindest die Produktzuführeinheit kann überlappend mit der Basiseinheit angeordnet sein. Insbesondere ist die Produktzuführeinheit beabstandet zu der Basiseinheit angeordnet. In Höhenrichtung betrachtet kann die Produktzuführeinheit oberhalb der Basiseinheit angeordnet sein. Möglicherweise kann zumindest das Produkt in dem Übergabebereich stückweise in Höhenrichtung betrachtet von der Produktzuführeinheit zumindest teilweise herunterfallen und insbesondere auf der Auflage der zumindest zwei Mover landen.

Um eine effiziente, insbesondere schnelle und/oder unkomplizierte, Aufnahme von Produkten mittels der Mover gewährleisten zu können, wird vorgeschlagen, dass die Steuereinheit dazu vorgesehen ist, die zumindest zwei Mover in einem Bereich unterhalb der Produktzuführeinheit zusammenzufassen. Hierdurch kann eine Leistung und/oder eine Geschwindigkeit eines gesamten Produkthandhabungsprozesses weiter verbessert werden. Zudem können die Mover vor der Aufnahme von Produkten gesammelt sowie sortiert und/oder geordnet werden. Außerdem kann eine Aufnahmegeschwindigkeit von Produkten von zumindest einer Produktzuführeinheit erhöht werden.

Insbesondere ist der Bereich verschieden zu dem Übergabebereich. Bevorzugt erfolgt das Zusammenfassen der zumindest zwei Mover vor der Übergabe der Produkte an die Mover. Insbesondere werden die zumindest zwei Mover mittels der Steuereinheit in dem Bereich unterhalb der Produktzuführeinheit, und zwar vor dem Übergabebereich zusammengefasst. In Transportrichtung der Produktzuführeinheit betrachtet kann sich der genannte Bereich vor dem Übergabebereich befinden.

Die Steuereinheit kann dazu vorgesehen sein, die zumindest zwei Mover bei Annäherung an die Produktabführeinheit zumindest zu beschleunigen oder abzubremsen. Denkbar wäre auch, dass die Steuereinheit die zumindest zwei Mover schlagartig stoppt. Insbesondere dient die Änderung der Geschwindigkeit der zumindest zwei Mover zu einer Abgabe des Produkts an die Produktabführeinheit. Mittels der Änderung der Geschwindigkeit der zumindest zwei Mover kann eine trägheitsbedingte Übergabe zumindest des Produkts von zumindest den zwei Movern an die Produktabführeinheit erfolgen und/oder realisiert werden. Ferner kann die Steuereinheit dazu vorgesehen sein, in Abhängigkeit von einer Fördergeschwindigkeit der Produkte auf zumindest der Produktzuführeinheit und/oder der Produktabführeinheit die Geschwindigkeit der zumindest zwei Mover anzupassen und/oder zu verändern.

Denkbar wäre, dass die Produktabführeinheit zumindest abschnittsweise in die Basiseinheit hineinragt oder sich vollständig beispielsweise mittig entlang der Basiseinheit erstreckt. Alternativ und/oder zusätzlich könnte die Produktabführeinheit in Höhenrichtung betrachtet oberhalb der Basiseinheit angeordnet sein. Die Steuereinheit könnte die Mover, insbesondere die zumindest zwei Mover, möglicherweise über die Produktabführeinheit bewegen und insbesondere die Mover derart ansteuern und/oder regeln, dass sich diese oberhalb und/oder über der Produktabführeinheit bewegen.

Um einen hohen Reinheitsgrad innerhalb einer Produkthandhabungsvorrichtung und bei Handhabung von Produkten bereitzustellen, wird vorgeschlagen, dass ein Bewegungsbereich der zumindest zwei Mover überlappungsfrei mit der Produktabführeinheit angeordnet ist. Hierdurch können hygienische Produkte und/oder hoch sterile Produkte, wie beispielsweise medizinische Produkte, gehandhabt, und zwar gefördert und/oder sortiert werden. Zudem kann eine Komplexität einer Konstruktion der Produkthandhabungsvorrichtung reduziert werden.

Insbesondere weist die Basiseinheit den Bewegungsbereich auf und/oder definiert jenen. Die Mover sind in dem Bewegungsbereich mittels der Steuereinheit bewegbar und/oder ansteuerbar. Bevorzugt grenzt die Produktabführeinheit mittelbar oder bevorzugt unmittelbar an den Bewegungsbereich, insbesondere die Basiseinheit, an. Vorteilhaft sind der Bewegungsbereich, insbesondere die Basiseinheit und die Produktabführeinheit in einer gemeinsamen Ebene, insbesondere einer gemeinsamen Horizontalebene, angeordnet. Alternativ könnte die Produktabführeinheit auch versetzt, und zwar in Höhenrichtung betrachtet versetzt zu dem Bewegungsbereich angeordnet sein. Beispielsweise könnte die Produktabführeinheit in Höhenrichtung betrachtet oberhalb oder unterhalb des Bewegungsbereichs angeordnet sein. Bevorzugt ist zumindest die Produktzuführeinheit überlappend mit dem Bewegungsbereich angeordnet.

Zudem wird vorgeschlagen, dass die Steuereinheit dazu vorgesehen ist, die zumindest zwei Mover zur Abgabe des Produkts voneinander weg zu bewegen. Damit kann eine Abgabe von Produkten an zumindest eine Produktabführeinheit weiter verbessert, und zwar vereinfacht und effizienter gestaltet werden. Zudem kann eine Abgabegeschwindigkeit von Produkten an die Produktabführeinheit erhöht werden.

Denkbar wäre, dass die Steuereinheit lediglich einen der zumindest zwei Mover aktiv von dem anderen wegbewegt. Bevorzugt ist die Steuereinheit dazu vorgesehen, zumindest die zwei Mover beide zeitgleich voneinander weg zu bewegen. Die Steuereinheit kann die zumindest zwei Mover derart ansteuern, dass sich die zumindest zwei Mover in einem weiteren Übergabebereich bezüglich der Produktabführeinheit, insbesondere vor der Produktabführeinheit voneinander wegbewegen. Insbesondere beschleunigt die Steuereinheit die Mover bei Annäherung an die Produktabführeinheit und bewegt diese gleichzeitig, vorteilhaft zeitgleich, voneinander weg. Die Steuereinheit könnte die zumindest zwei Mover in zumindest dem Betriebszustand zumindest teilweise linear bewegen. Alternativ und/oder zusätzlich könnte die Steuereinheit dazu vorgesehen sein, die zumindest zwei Mover bogenförmig und/oder zumindest abschnittsweise kreisförmig zu bewegen.

Außerdem wird vorgeschlagen, dass die Steuereinheit dazu vorgesehen ist, in zumindest einem weiteren Betriebszustand die Mover getrennt voneinander zu bewegen. Dadurch kann eine Effizienz bei Handhabung von Produkten, und zwar bei Sortierung und/oder Förderung von Produkten weiter gesteigert werden. Zudem kann eine Effizienz in einer Führung von Movern erhöht werden. Außerdem können komplexe Systeme mit beispielsweise mehreren Produktzuführeinheiten auf effiziente Art und Weise realisiert und/oder betrieben werden.

Insbesondere weist jeder Mover der Vielzahl von Movern zumindest den Betriebszustand und zumindest den weiteren Betriebszustand auf. In zumindest dem Betriebszustand fasst die Steuereinheit zumindest zwei Mover der Vielzahl von Movern für die gemeinsame Auflage für zumindest das Produkt zusammen.

In zumindest dem weiteren Betriebszustand kann die Steuereinheit zumindest zwei Mover der Vielzahl von Movern getrennt voneinander bewegen. Vorteilhaft befindet sich im Betrieb der Produkthandhabungsvorrichtung jeder Mover der Vielzahl von Movern in zumindest einem der genannten Betriebszustände, und zwar in zumindest dem Betriebszustand oder in zumindest dem weiteren Betriebszustand. Bevorzugt ist der Betriebszustand auch als ein Produkttransport-Betriebszustand bezeichenbar. Ferner kann der weitere Betriebszustand als ein Moverrückführ-Betriebszustand bezeichnet werden. Die zumindest zwei Mover können in den Betriebszuständen zumindest unterschiedliche Geschwindigkeiten aufweisen und/oder unterschiedliche Bewegungen und/oder Bewegungsformen ausführen. Beispielsweise könnten die zumindest zwei Mover in zumindest dem Betriebszustand eine höhere Geschwindigkeit aufweisen als in zumindest dem weiteren Betriebszustand oder andersrum. Die Steuereinheit kann dazu vorgesehen sein, die zumindest zwei Mover in den unterschiedlichen Betriebszuständen unterschiedlich stark anzutreiben, und zwar unterschiedlich stark zu beschleunigen und/oder abzubremsen, um beispielsweise die Geschwindigkeit der zumindest zwei Mover zu verändern.

Möglicherweise wäre denkbar, dass die zumindest zwei Mover stets Produkte aus derselben Produktzuführeinheit aufnehmen. Die Steuereinheit könnte die zumindest zwei Mover, insbesondere in dem weiteren Betriebszustand, nach Abgabe des Produkts in und/oder an die Produktabführeinheit stets zu derselben Produktzuführeinheit zurückführen, und zwar vorteilhaft unabhängig von einer Anzahl an vorliegenden Produktzuführeinheiten.

Ferner wird vorgeschlagen, dass die Steuereinheit dazu vorgesehen ist, in einem ersten Durchlauf einen ersten Mover der zwei Mover von der Produktabführeinheit zu einer ersten Produktzuführeinheit und einen zweiten Mover der zwei Mover zu einer zweiten Produktzuführeinheit zu bewegen. Damit kann eine Effizienz in einer Führung von Movern und somit verbundenen Handhabung, und zwar Förderung und/oder Sortierung von Produkten weiter optimiert werden.

Bevorzugt handelt es sich bei der ersten Produktzuführeinheit und der zweiten Produktzuführeinheit um die bereits genannte erste und zweite Produktzuführeinheit. Die erste Produktzuführeinheit und die zweite Produktzuführeinheit können zur Zuführung, insbesondere zur Förderung, gleicher oder unterschiedlicher Produkte vorgesehen sein. Bevorzugt ist mit der ersten Produktzuführeinheit das erste Produkt und mit der zweiten Produktzuführeinheit das zweite Produkt, welches ein von dem ersten Produkt verschiedenes Produkt ist, zuführbar. In dem ersten Durchlauf könnten der erste Mover und der zweite Mover gemeinsam das erste Produkt aus der ersten Produktzuführeinheit aufnehmen. Die Steuereinheit kann in dem ersten Durchlauf zumindest die zwei Mover, und zwar den ersten Mover und zumindest den zweiten Mover zusammenfassen. Die Steuereinheit kann in dem ersten Durchlauf den ersten Mover und den zweiten Mover gemeinsam von der ersten Produktzuführeinheit zu der Produktabführeinheit bewegen. Nach Abgabe des Produkts an und/oder in die Produktabführeinheit kann die Steuereinheit in dem ersten Durchlauf zumindest den ersten Mover von der Produktabführeinheit zu der ersten Produktzuführeinheit und den zweiten Mover von der Produktabführeinheit der zweiten Produktzuführeinheit zurückführen. Die Steuereinheit kann in dem ersten Durchlauf zumindest die zwei Mover, und zwar den erstem Mover und zumindest den zweiten Mover getrennt voneinander bewegen. Insbesondere umfasst der erste Durchlauf zumindest den Betriebszustand und zumindest den weiteren Betriebszustand.

Möglicherweise wäre denkbar, dass die Steuereinheit den ersten Mover von der Produktabführeinheit stets zu der ersten Produktzuführeinheit bewegt und/oder zurückführt. Ferner kann die Steuereinheit stets den zweiten Mover von der Produktabführeinheit zu der zweiten Produktzuführeinheit bewegen und/oder zurückführen. Des Weiteren wird jedoch vorgeschlagen, dass die Steuereinheit dazu vorgesehen ist, in einem zweiten Durchlauf zumindest den ersten Mover von der Produktabführeinheit zu der zweiten Produktzuführeinheit zu bewegen. Hierdurch kann eine Führung von Movern weiter verbessert und eine Effizienz, hinsichtlich einer Produkt- und/oder Betriebs- und/oder eine Arbeitseffizienz gesteigert werden. Ferner können damit Fördergeschwindigkeiten und/oder Sortierungsgeschwindigkeiten von Produkten erhöht werden. Zudem kann eine Abgabe von Produkten in/an zumindest eine Produktabführeinheit optimiert sowie eine Rückführung von Movern an zumindest eine Produktzuführeinheit effizienter gestaltet werden, sodass bevorzugt Kollisionen verhindert und/oder vermieden werden können. Darüber hinaus kann eine Komplexität in einer Führung von Movern von zumindest der Produktabführeinheit zu zumindest der Produktzuführeinheit verringert werden.

Die Steuereinheit kann die zumindest zwei Mover von der Produktabführeinheit getrennt, insbesondere in dem weiteren Betriebszustand, zu unterschiedlichen Produktzuführeinheiten, insbesondere zu der ersten Produktzuführeinheit und zumindest der zweiten Produktzuführeinheit, bewegen und/oder zurückführen. Alternativ kann die Steuereinheit dazu vorgesehen sein, die zumindest zwei Mover von der Produktabführeinheit zu derselben Produktzuführeinheit, insbesondere zu der ersten oder der zweiten Produktzuführeinheit, zu bewegen und/oder zurückzuführen. Insbesondere wenn die Steuereinheit in dem zweiten Durchlauf zumindest den ersten Mover von der Produktabführeinheit zu der zweiten Produktzuführeinheit bewegt, kann die Steuereinheit in dem zweiten Durchlauf zusätzlich zumindest den zweiten Mover von der Produktabführeinheit zu der zweiten Produktzuführeinheit bewegen. Alternativ könnte die Steuereinheit in dem zweiten Durchlauf zumindest den zweiten Mover von der Produktabführeinheit zu der ersten Produktzuführeinheit bewegen. Insbesondere werden in dem Betrieb der Produkthandhabungsvorrichtung der erste Durchlauf und zumindest der zweite Durchlauf zeitlich wiederkehrend wiederholt, insbesondere abwechselnd. Insbesondere umfasst der erste Durchlauf zumindest den Betriebszustand und zumindest den weiteren Betriebszustand.

Besonders bevorzugt ist die Steuereinheit dazu vorgesehen, in Abhängigkeit von der Fördergeschwindigkeit, insbesondere einer Zuführgeschwindigkeit, der Produkte auf/von zumindest den Produktzuführeinheiten, insbesondere der ersten Produktzuführeinheit und/oder der zweiten Produktzuführeinheit, die zumindest zwei Mover, und zwar den ersten Mover und den zweiten Mover, nach Abgabe des Produkts in/an die Produktabführeinheit entweder zu der ersten Produktzuführeinheit oder zu der zweiten Produktzuführeinheit zurückzuführen und/oder zu bewegen. In Abhängigkeit von der Fördergeschwindigkeit, insbesondere der Zuführgeschwindigkeit, der Produkte auf/von den Produktzuführeinheiten kann die Steuereinheit entscheiden, ob die zumindest zwei Mover jeweils getrennt zu unterschiedlichen Produktzuführeinheiten oder zu derselben Produktzuführeinheit zurückgeführt werden, und insbesondere die zumindest zwei Mover derart ansteuern. Damit können bevorzugt ungleiche Fördergeschwindigkeiten von Produktzuführeinheiten ausgeglichen werden.

Wenn eine Produktaufnahmeseite zumindest eines der zumindest zwei Mover entlang zumindest einer Symmetrieebene spiegelsymmetrisch ausgebildet ist, kann neben einer gesteigerten Effizienz eine hohe Flexibilität sowie ein verbesserter Komfort bereitgestellt werden. Dadurch können Mover flexibel und variabel einsetzbar sein, und zwar unabhängig von einer rechten oder linken Seitenausrichtung und/oder Seitenausgestaltung.

Vorteilhaft sind die zumindest zwei Mover zumindest im Wesentlichen plattenartig ausgebildet. Die zumindest zwei Mover können hinsichtlich zumindest ihrer Größe und/oder Form und/oder Materialzusammensetzung zumindest im Wesentlichen identisch zueinander ausgebildet sein. Mit der Formulierung "zumindest im Wesentlichen identische Objekte" sind in diesem Zusammenhang Objekte gemeint, die vorteilhafterweise die gleiche Struktur und/oder Form und/oder Bauart und/oder Größe und/oder zumindest zu einem Großteil oder vollständig die gleiche Materialzusammensetzung aufweisen, sich aber insbesondere hinsichtlich ihrer Funktionalität, ihres inneren Aufbaus und/oder ihrer Anordnung an einem anderen/weiteren Objekt und/oder ihrer Ausrichtung bezüglich eines weiteren Objekts zumindest teilweise unterscheiden können. Vorzugsweise sind die zumindest im Wesentlichen identischen Objekte jedoch abgesehen von Fertigungstoleranzen und/oder im Bereich von genormten Toleranzen identisch zueinander.

Besonders bevorzugt sind alle Mover der Vielzahl von Movern der Produkthandhabungsvorrichtung identisch ausgebildet.

Insbesondere steht die Symmetrieebene zumindest im Wesentlichen senkrecht auf der Produktaufnahmeseite. Unter "zumindest im Wesentlichen senkrecht" soll in diesem Zusammenhang unter einem Winkel zwischen 85° und 95°, vorzugsweise zwischen 88° und 92° und besonders vorteilhaft von 90° verstanden werden, insbesondere wobei ein Winkel zwischen der Produktaufnahmeseite und der Symmetrieebene um höchstens 5°, vorzugsweise um höchstens 2° und besonders vorteilhaft um höchstens 1° von einem rechten Winkel abweicht.

Ferner wird vorgeschlagen, dass die zumindest zwei Mover jeweils zumindest eine Führungseinheit aufweisen, um bei Aufnahme des Produkts das Produkt zur Auflage zu führen. Damit kann eine Aufnahme von Produkten mittels der Mover verbessert und somit eine Effizienz weiter gesteigert werden. Zudem kann eine Aufnahmegeschwindigkeit gesteigert werden.

Vorzugsweise ist die Führungseinheit mittig auf der Produktaufnahmeseite der Mover angeordnet. Die Führungseinheit kann beispielsweise einen Führungskanal aufweisen. Bevorzugt weist die Führungseinheit zumindest eine Schrägfläche auf, an welcher das Produkt zur Auflage führbar und/oder leitbar ist. Insbesondere weist die Führungseinheit eine Dreiecksform auf. Die zuvor genannte Symmetrieebene kann durch die Spitze der als Dreieck ausgebildeten Führungseinheit verlaufen. Vorteilhaft sind die Seiten des Dreiecks jeweils als Schrägflächen ausgebildet, an welchen das Produkt zur Auflage führbar und/oder leitbar ist. Insbesondere begrenzen die Führungseinheiten der zwei Mover jeweils die Auflage. Die Führungseinheit kann eine Höhenerstreckung von beispielsweise zumindest 5 mm, vorteilhaft zumindest 10 mm, bevorzugt zumindest 15 mm und höchstens zumindest 5 cm aufweisen.

Zudem wird vorgeschlagen, dass die zumindest zwei Mover jeweils zumindest eine Halteeinheit zur Halterung des Produkts innerhalb der Auflage aufweisen. Dadurch kann eine Sicherheit bei Handhabung von Produkten verbessert werden. Zudem kann ein Herunterrutschen und/oder Herunterfallen zumindest eines Produkts von einer Auflage der zumindest zwei Mover verhindert werden.

Vorzugsweise ist die Halteeinheit als ein Stopper ausgebildet. Die Halteeinheit kann eine Höhenerstreckung von beispielsweise zumindest 5 mm, vorteilhaft zumindest 10 mm, bevorzugt zumindest 15 mm und höchstens zumindest 5 cm aufweisen. Jeder der Mover kann auch mehrere Halteeinheiten aufweisen, beispielsweise zumindest zwei Halteeinheiten. Die Halteeinheiten können jeweils auf gegenüberliegenden Seiten der Führungseinheit auf der Produktaufnahmeseite des Movers angeordnet sein.

Darüber hinaus geht die Erfindung aus von einem Verfahren zur Handhabung, insbesondere zur Förderung und/oder Sortierung, von Produkten, mit einer Produkthandhabungsvorrichtung, insbesondere der zuvor genannten Produkthandhabungsvorrichtung, welche eine Vielzahl von Movern aufweist, wobei zumindest zwei der Mover zu einer gemeinsamen Auflage für zumindest ein Produkt zusammengefasst werden. Durch ein derartiges Verfahren kann eine Effizienz bei Handhabungen von Produkten gesteigert werden. Ferner können Förderungen und/oder Sortierungen von Produkten effizienter, und zwar schneller, komfortabler und störungsfreier realisiert werden. Die bereits oben genannten Beschreibungen und Ausführungen zur Handhabung von Produkten können ebenfalls auf das Verfahren übertragen und verfahrenstechnisch formuliert werden.

Die Produkthandhabungsvorrichtung und/oder das Produkthandhabungssystem und/oder die Verpackungsmaschine und/oder das Verfahren soll/sollen hierbei nicht auf die oben beschriebene Anwendung und Ausführungsform beschränkt sein. Insbesondere kann/können die Produkthandhabungsvorrichtung und/oder das Produkthandhabungssystem und/oder die Verpackungsmaschine und/oder das Verfahren zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Verpackungsmaschine mit einem Produkthandhabungssystem, welche wiederum eine Produkthandhabungsvorrichtung aufweist,
- Fig. 2: eine Draufsicht auf die Produkthandhabungsvorrichtung, welche eine Vielzahl von Movern aufweist, und mit zumindest zwei Produktzuführeinheiten und einer Produktabführeinheit des Produkthandhabungssystems,
- Fig. 3: eine Detailansicht, und zwar eine Seitenansicht von zumindest zwei Movern,
- Fig. 4: eine weitere Detailansicht, und zwar eine Draufsicht auf die zumindest zwei Mover gemäß Figur 3 mit einem auf den Movern angeordneten Produkt und
- Fig. 5: ein schematisches dargestelltes Verfahren zur Handhabung von Produkten.

### Beschreibung des Ausführungsbeispiels

Der Übersichtlichkeit halber ist nachfolgend von mehrfach vorhandenen Objekten in den Figuren jeweils lediglich eines mit einem Bezugszeichen versehen. Die Ausführungen und Beschreibungen zu einem Objekt können auf die weiteren identischen Objekte übertragen werden. Ferner handelt es sich bei den vorliegenden Figuren um schematische und nicht maßstabsgetreue Darstellungen.

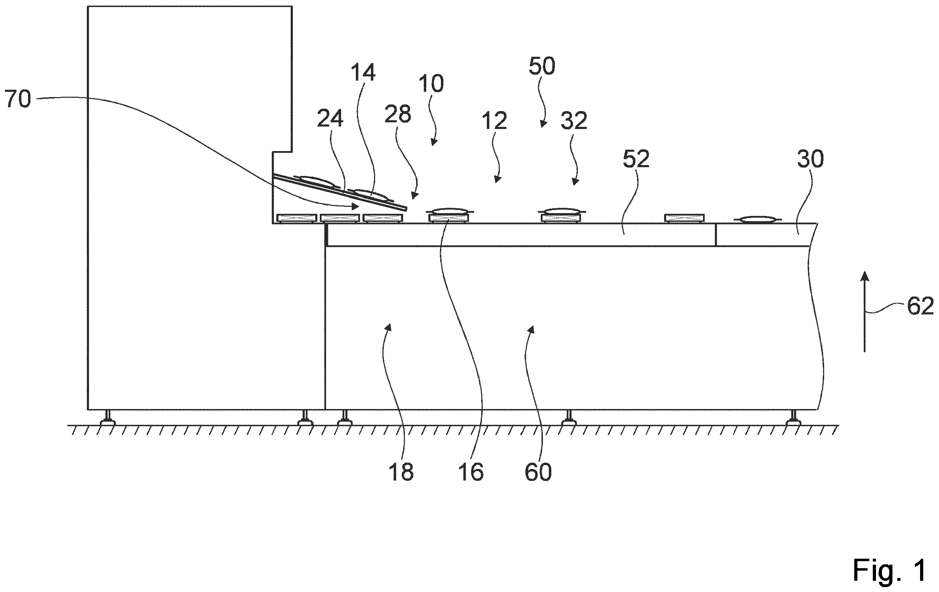

Die Figur 1 zeigt eine Verpackungsmaschine 50. Die Verpackungsmaschine 50 ist vorliegend zumindest zu einem Verpacken und/oder Abpacken von Füllgütern vorgesehen. Ferner kann die Verpackungsmaschine 50, ohne darauf beschränkt zu sein, zu einer Abfüllung, Be- und/oder Verarbeitung, Dosierung, Lagerung, Sterilisation und/oder Verschließung von Füllgütern vorgesehen sein. Das Füllgut (nicht dargestellt) kann beispielsweise fest, flüssig, pastös und/oder stückig sein.

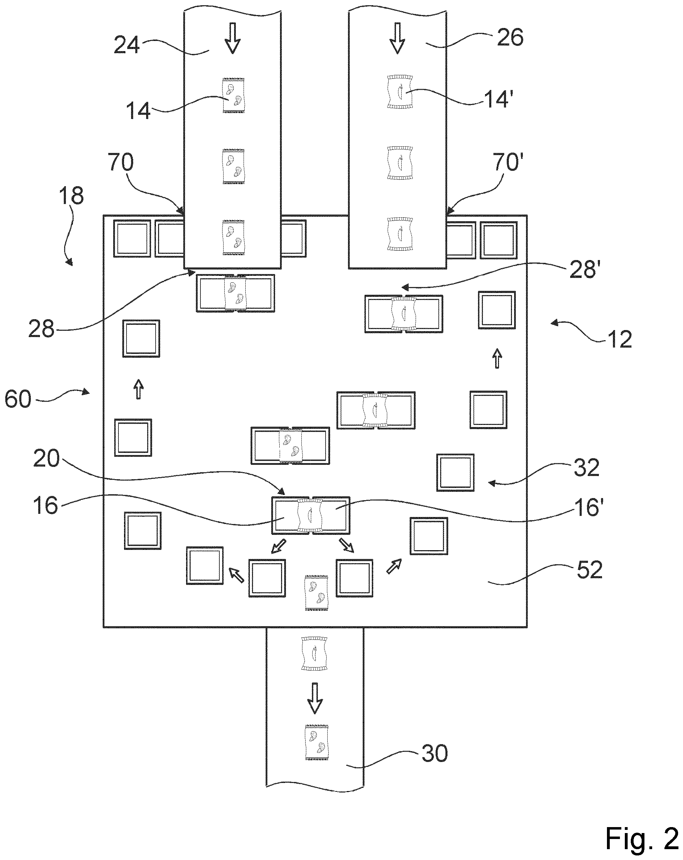

Die Verpackungsmaschine 50 weist vorliegend ein Produkthandhabungssystem 10 auf. Das Produkthandhabungssystem 10 ist zur Handhabung, und zwar zur Förderung und/oder Sortierung von Produkten 14, 14' vorgesehen. In dieser beispielhaften Ausgestaltung handelt es sich bei dem Produkt 14, 14' um ein zumindest teilweise verpacktes Produkt 14, 14', wobei das Produkt 14, 14' zumindest eine Verpackung und das in der Verpackung angeordnete Füllgut aufweist. Alternativ könnte es sich bei dem Produkt 14, 14' auch um ein unverpacktes Produkt 14, 14' handeln. Das Produkt 14, 14' kann ein Lebensmittel, ein pharmazeutisches Produkt, ein Bedarfsgut, ein Beauty- und/oder Körperpflegeprodukt oder dergleichen sein. Beispielhaft sind in dieser Ausführung Chips-Tüten als Produkte 14, 14' dargestellt (vgl. Figur 2). Alternativ kann es sich um jedes andere erdenkliche, einem Fachmann als sinnvoll erscheinende, Produkt 14, 14' handeln.

Das Produkthandhabungssystem 10 umfasst zumindest eine Produktzuführeinheit 24, 26 und zumindest eine Produktabführeinheit 30. Vorliegend weist das Produkthandhabungssystem 10 zumindest zwei Produktzuführeinheiten 24, 26, und zwar eine erste Produktzuführeinheit 24 und zumindest eine zweite Produktzuführeinheit 26 auf. Die erste Produktzuführeinheit 24 und die zweite Produktzuführeinheit 26 sind zur Zuführung, und zwar zur Förderung von Produkten 14, 14' vorgesehen. Die erste Produktzuführeinheit 24 und die zweite Produktzuführeinheit 26 können zur Zuführung gleicher Produkte 14, 14' vorgesehen sein. In dieser beispielhaften Ausgestaltung sind die erste Produktzuführeinheit 24 und die zweite Produktzuführeinheit 26 zur Förderung von unterschiedlichen Produkten 14, 14' vorgesehen. Vorliegend handelt es sich bei den unterschiedlichen Produkten 14, 14' um verschiedene Chips. Ein erstes Produkt 14 der Produkte 14, 14' ist hierbei mit dem Bezugszeichen 14 gekennzeichnet. Ein zweites Produkt 14' der Produkte 14, 14' weist vorliegend das Bezugszeichen 14' auf. Gemäß Figur 2 ist ersichtlich, dass die erste Produktzuführeinheit 24 das erste Produkt 14 und die zweite Produktzuführeinheit 26 das zweite Produkt 14' zuführt.

Ferner weist das Produkthandhabungssystem 10 eine Produkthandhabungsvorrichtung 12 auf. Die Produkthandhabungsvorrichtung 12 ist dazu vorgesehen, Produkte 14, 14' zu handhaben, und zwar zu fördern, zu bewegen, zu transportieren, zu sortieren und/oder zu überführen. Vorliegend ist die Produkthandhabungsvorrichtung 12 dazu vorgesehen, die Produkte 14, 14' von den Produktzuführeinheiten 24, 26 zu zumindest der Produktabführeinheit 30 zu führen, und zwar zu überführen. Außerdem ist die Produkthandhabungsvorrichtung 12 vorliegend dazu vorgesehen, die Produkte 14, 14' bei Führung, und zwar Überführung von den Produktzuführeinheiten 24, 26 zu zumindest der Produktabführeinheit 30 zu sortieren, und zwar in einer bestimmten und vordefinierten Reihenfolge, beispielsweise abwechselnd, zur Produktabführeinheit 30 zu fördern und/oder zu überführen. Da es sich vorliegend um unterschiedliche Produkte 14, 14' handelt, ist die Produkthandhabungsvorrichtung 12 dazu vorgesehen, die unterschiedlichen Produkte 14, 14' zusammenzuführen und zu sortieren (vgl. Figur 2).

Zur Handhabung, und zwar zur Förderung und/oder Sortierung der Produkte 14, 14' weist die Produkthandhabungsvorrichtung 12 eine Vielzahl von Movern 16, 16' auf (vgl. Figur 2). Vorliegend sind die Mover 16, 16' als elektrodynamisch bewegliche Mover 16, 16' ausgebildet. Ferner weist die Produkthandhabungsvorrichtung 12 eine Basiseinheit 52 auf, bezüglich welcher die Mover 16, 16' bewegbar sind. Vorliegend ist die Basiseinheit 52 plattenförmig ausgebildet. Zu einem Antrieb der Mover 16, 16' weist die Produkthandhabungsvorrichtung 12 eine Antriebseinheit 60 auf. Mittels der Antriebseinheit 60 ist eine auf die Mover 16, 16' wirkende Antriebskraft, und zwar eine elektromagnetische Antriebskraft erzeugbar, um eine Bewegung, bevorzugt eine Translationsbewegung und/oder eine Rotationsbewegung, der Mover 16, 16' relativ zu der Basiseinheit 52 zu erzeugen und/oder hervorzurufen. Die Mover 16, 16' sind zumindest im Wesentlichen parallel zu der Basiseinheit 52 bewegbar, und zwar in einer zu der Basiseinheit 52 parallel verlaufenden Bewegungsebene. Vorliegend ist die Antriebseinheit 60 dazu vorgesehen, die Mover 16, 16' zu Bewegungen anzutreiben, die zumindest im Wesentlichen parallel zu der Basiseinheit 52 verlaufen.

Zur Ansteuerung der Mover 16, 16' weist die Produkthandhabungsvorrichtung 12 eine Steuereinheit 18 auf. Die Steuereinheit 18 ist dazu vorgesehen, die Antriebseinheit 60 anzusteuern, um damit zumindest eine Bewegung der Mover 16, 16' zu steuern und/oder zu regeln. Die Steuereinheit 18 ist zumindest dazu vorgesehen, die Bewegung der Mover 16, 16' derart zu steuern und/oder zu regeln, dass die Mover 16, 16' Produkte 14, 14' von den Produktzuführeinheiten 24, 26 zu der Produktabführeinheit 30 fördern und/oder transportieren. Die Steuereinheit 18 ist dazu vorgesehen, in zumindest einem Betriebszustand zumindest zwei der Mover 16, 16' zu einer gemeinsamen Auflage 20 für zumindest ein Produkt 14, 14' der Produkte 14, 14' zusammenzufassen.

Vorliegend bewegen sich die zumindest zwei Mover 16, 16' in zumindest dem Betriebszustand gemeinsam bezüglich der Basiseinheit 52. In zumindest dem Betriebszustand ist zumindest das Produkt 14, 14' auf der Auflage 20 der zumindest zwei Mover 16, 16' angeordnet. Figur 2 verdeutlicht, dass in dem Betriebszustand zumindest zwei Mover 16, 16' gemeinsam die Auflage 20 bilden. Die Steuereinheit 18 ist dazu vorgesehen, die zumindest zwei Mover 16, 16' in dem Betriebszustand von zumindest der Produktzuführeinheit 24, 26 zu zumindest der Produktabführeinheit 30 zu bewegen.

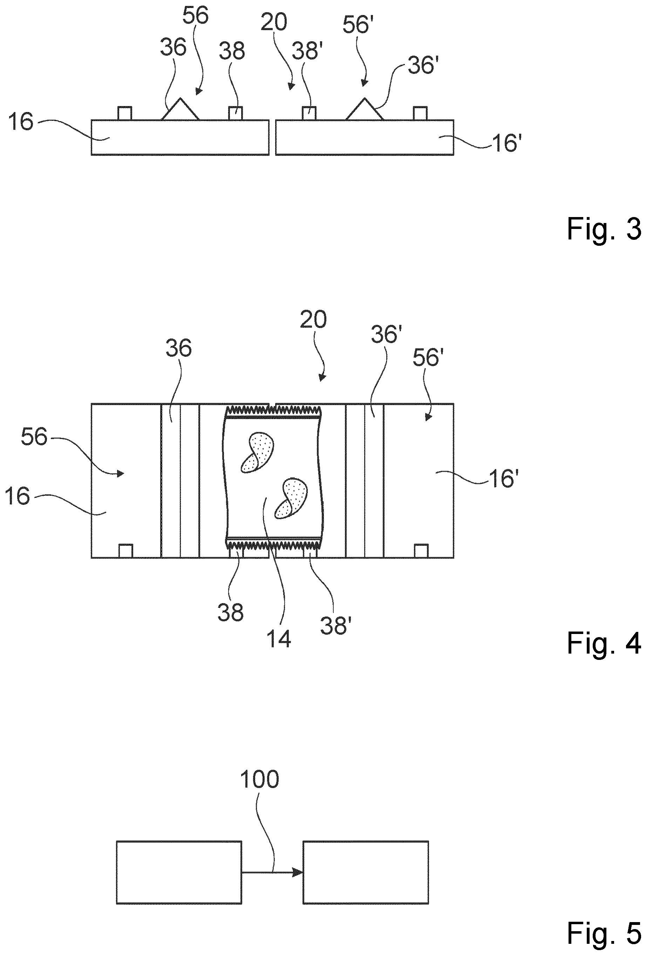

Bevor im Detail weiter auf die Bewegungen der Mover 16, 16' eingegangen wird, soll im Folgenden vorab die Ausgestaltung der Mover 16, 16' genauer erläutert werden. Die Figuren 3 und 4 zeigen jeweils Detailansichten von zwei zusammengefassten Movern 16, 16', wobei die Figur 3 eine Seitenansicht und die Figur 4 eine Draufsicht darstellt.

Die zumindest zwei Mover 16, 16' sind vorliegend zumindest im Wesentlichen plattenartig ausgebildet. Die zumindest zwei Mover 16, 16' weisen jeweils eine Produktaufnahmeseite 56, 56' auf. Zumindest eine Produktaufnahmeseite 56, 56' zumindest eines der zumindest zwei Mover 16, 16' ist entlang zumindest einer Symmetrieebene spiegelsymmetrisch ausgebildet ist. Die Symmetrieebene steht zumindest im Wesentlichen senkrecht auf der Produktaufnahmeseite 56, 56'. Vorliegend sind beide Produktaufnahmeseiten 56, 56' beider Mover 16, 16' entlang zumindest einer Symmetrieebene spiegelsymmetrisch ausgebildet. Ferner sind die zumindest zwei Mover 16, 16' zueinander zumindest im Wesentlichen identisch ausgebildet, und zwar unabhängig von Fertigungstoleranzen. Vorliegend sind alle Mover 16, 16' der Vielzahl von Movern 16, 16' der Produkthandhabungsvorrichtung 12 zumindest im Wesentlichen identisch ausgebildet.

Um bei Aufnahme des Produkts 14, 14' das Produkt 14, 14' zur Auflage 20 zu führen, weisen die zumindest zwei Mover 16, 16' jeweils zumindest eine Führungseinheit 36, 36' auf. Die Führungseinheit 36, 36' ist vorliegend mittig auf der Produktaufnahmeseite 56, 56' angeordnet. In dieser beispielhaften Ausgestaltung weist die Führungseinheit 36, 36' eine Dreiecksform auf. Vorliegend verläuft die zuvor genannte Symmetrieebene durch die Spitze der als Dreieck ausgebildeten Führungseinheit 56, 56'. Die Seiten des Dreiecks sind jeweils als Schrägflächen ausgebildet, an welchen das Produkt 14, 14' zur Auflage 20 führbar und/oder leitbar ist. Vorliegend begrenzen die Führungseinheiten 36, 36' der zwei Mover 16, 16' jeweils die Auflage 20.

Um ein Herunterrutschen und/oder Herunterfallen zumindest des Produkts 14, 14' von der Auflage 20 zu verhindern, weisen die zumindest zwei Mover 16, 16' jeweils zumindest eine Halteeinheit 38, 38' zur Halterung des Produkts 14, 14' innerhalb der Auflage 20 auf. Vorliegend ist die Halteeinheit 38, 38' als ein Stopper ausgebildet. Figur 4 verdeutlicht, dass jeder Mover 16, 16' in dieser beispielhaften Ausgestaltung zwei Halteeinheiten 38, 38' aufweist, wobei lediglich einer pro Mover 16, 16' mit einem Bezugszeichen versehen ist. Die Halteeinheiten 38, 38' sind vorliegend jeweils auf gegenüberliegenden Seiten der Führungseinheit 36, 36' auf der Produktaufnahmeseite 56, 56' jedes Movers 16, 16' angeordnet. Figur 4 verdeutlicht die Anordnung eines Produkts 14 der Produkte 14, 14' auf der Auflage 20. Das Produkt 14 ist zwischen den Führungseinheiten 36, 36' der zwei Mover 16, 16' angeordnet. Ferner liegt das Produkt 14 jeweils an einer Halteeinheit 38, 38' der zwei Mover 16, 16' an, welche das Herunterfallen und/oder Herunterrutschen des Produkts 14 verhindern.

Figur 2 verdeutlicht in einer Draufsicht die Anordnung der Basiseinheit 52, der Produktzuführeinheiten 24, 26 und der Produktabführeinheit 30 sowie eine Bewegung der Mover 16, 16' zur Handhabung, und zwar zur Förderung und/oder Sortierung von Produkten 14, 14'.

Zu einer effizienten, und zwar schnellen und/oder unkomplizierten, Aufnahme von Produkten 14, 14' aus zumindest einer der Produktzuführeinheiten 24, 26 ist die Steuereinheit 18 dazu vorgesehen, die zumindest zwei Mover 16, 16' in einem Bereich 70, 70' unterhalb der Produktzuführeinheit 24, 26 zusammenzufassen. Gemäß Figur 2 ist die Steuereinheit 18 dazu vorgesehen, zumindest zwei Mover 16, 16' jeweils in einem Bereich 70, 70' unterhalb der ersten Produktzuführeinheit 24 und der zweiten Produktzuführeinheit 26 zusammenzufassen. Ferner fasst die Steuereinheit 18 die zumindest zwei Mover 16, 16' vor Aufnahme des Produkts 14, 14' aus einer der Produktzuführeinheiten 24, 26 zusammen. Das Produkt 14, 14' wird in einem Übergabebereich 28, 28' von der Produktzuführeinheit 24, 26 an die zumindest zwei Mover 16, 16' übergeben.

Vorliegend sind die Produktzuführeinheiten 24, 26 überlappend mit der Basiseinheit 52 angeordnet. Ferner sind die Produktzuführeinheiten 24, 26 in Höhenrichtung 62 betrachtet oberhalb der Basiseinheit 52 angeordnet (vgl. Figur 1). Zur Übergabe des Produkts 14, 14' von der Produktzuführeinheit 24, 26 zu den zumindest zwei Movern 16, 16' kann das Produkt 14, 14' in dem Übergabebereich 28, 28' stückweise in Höhenrichtung 62 betrachtet von der Produktzuführeinheit 24, 26 zumindest teilweise herunterfallen und auf der Auflage 20 der zumindest zwei Mover 16, 16' landen. Die zumindest zwei Mover 16, 16' werden mittels der Steuereinheit 18 in dem Bereich 70, 70' unterhalb der Produktzuführeinheit 24, 26, und zwar vor dem Übergabebereich 28, 28' zusammengefasst. Ferner befindet sich der genannte Bereich 70, 70', in Transportrichtung der Produktzuführeinheit 24, 26 betrachtet, vor dem jeweiligen Übergabebereich 28, 28'.

Ferner ist gemäß Figur 2 ersichtlich, dass ein Bewegungsbereich 32 der zumindest zwei Mover 16, 16' überlappungsfrei mit der Produktabführeinheit 30 angeordnet ist. Alternativ könnte die Produktabführeinheit 30 zumindest abschnittsweise überlappend mit dem Bewegungsbereich 32 angeordnet sein. Die Basiseinheit 52 weist den Bewegungsbereich 32 auf und/oder definiert jenen. Der Bewegungsbereich 32, und zwar die Basiseinheit 52 und die Produktabführeinheit 30 sind in einer gemeinsamen Ebene, und zwar vorliegend einer gemeinsamen Horizontalebene angeordnet. Alternativ könnte die Produktabführeinheit 30 in Höhenrichtung 62 betrachtet auch unterhalb oder oberhalb der Basiseinheit 52 angeordnet sein. Vorliegend sind die zumindest zwei Produktzuführeinheiten 24, 26 überlappend mit dem Bewegungsbereich 32 angeordnet (vgl. Figur 2).

Die Steuereinheit 18 ist dazu vorgesehen, eine Geschwindigkeit der zumindest zwei Mover 16, 16' bei Annäherung an die Produktabführeinheit 30 zu verändern. Beispielsweise kann die Steuereinheit 18 die zumindest zwei Mover 16, 16' bei Annäherung an die Produktabführeinheit 30 beschleunigen oder abbremsen. Die Änderung der Geschwindigkeit der zumindest zwei Mover 16, 16' dient zu einer Abgabe des Produkts 14, 14' an die Produktabführeinheit 30. Mittels der Änderung der Geschwindigkeit der zumindest zwei Mover 16, 16' kann eine trägheitsbedingte Übergabe/Abgabe zumindest des Produkts 14, 14' von zumindest den zwei Movern 16, 16' an die Produktabführeinheit 30 erfolgen und/oder realisiert werden. Vorliegend ist die Steuereinheit 18 ferner dazu vorgesehen, die Geschwindigkeit der zumindest zwei Mover 16, 16' in Abhängigkeit von einer Fördergeschwindigkeit der Produkte 14, 14' auf zumindest der Produktzuführeinheit 24, 26 und/oder der Produktabführeinheit 30 zu verändern und/oder anzupassen.

Ferner ist die Steuereinheit 18 dazu vorgesehen, die zumindest zwei Mover 16, 16' zur Abgabe des Produkts 14, 14' voneinander weg zu bewegen. Figur 2 verdeutlicht, dass die zumindest zwei Mover 16, 16' zeitgleich voneinander wegbewegt werden. Zur Zurückführung der zumindest zwei Mover 16, 16' von der Produktabführeinheit 30 zu zumindest einer der Produktzuführeinheiten 24, 26 ist die Steuereinheit 18 dazu vorgesehen, in zumindest einem weiteren Betriebszustand die zumindest zwei Mover 16, 16' getrennt voneinander zu bewegen (vgl. Figur 2). Im Betrieb der Produkthandhabungsvorrichtung 12 ist jeder Mover 16, 16' der Vielzahl von Movern 16, 16' in zumindest einem der genannten Betriebszustände, und zwar in zumindest dem Betriebszustand oder in zumindest dem weiteren Betriebszustand. Vorliegend ist der Betriebszustand auch als ein Produkttransport-Betriebszustand bezeichnenbar. Ferner ist der weitere Betriebszustand als ein Moverrückführ-Betriebszustand bezeichnenbar. Die zumindest zwei Mover 16, 16' können in den Betriebszuständen zumindest unterschiedliche Geschwindigkeiten aufweisen und/oder unterschiedliche Bewegungen und/oder Bewegungsformen ausführen. In dieser beispielhaften Ausführung weisen die zumindest zwei Mover 16, 16' in zumindest dem Betriebszustand eine niedrigere Geschwindigkeit aus als in zumindest dem weiteren Betriebszustand. Alternativ wäre es auch andersrum denkbar. Die Steuereinheit 18 ist dazu vorgesehen, die zumindest zwei Mover 16, 16' in den verschiedenen Betriebszuständen unterschiedlich stark anzutreiben, und zwar unterschiedlich stark zu beschleunigen und/oder abzubremsen, um beispielsweise die Geschwindigkeit der zumindest zwei Mover 16, 16' zu verändern.

In einem ersten Durchlauf ist die Steuereinheit 18 dazu vorgesehen, einen ersten Mover 16 der zwei Mover 16, 16' von der Produktabführeinheit 30 zu der ersten Produktzuführeinheit 24 und einen zweiten Mover 16' der zwei Mover 16, 16' zu der zweiten Produktzuführeinheit 26 zu bewegen. Dieses Scenario ist schematisch in Figur 2 dargestellt. In einem zweiten Durchlauf ist die Steuereinheit 18 dazu vorgesehen, zumindest den ersten Mover 16 von der Produktabführeinheit 30 zu der zweiten Produktzuführeinheit 26 zu bewegen. Alternativ könnte die Steuereinheit 18 in dem zweiten Durchlauf zumindest den ersten Mover 16 von der Produktabführeinheit 30 zu der ersten Produktzuführeinheit 24 bewegen. Vorliegend ist die Steuereinheit 18 dazu vorgesehen, in Abhängigkeit von der Fördergeschwindigkeit/Zuführgeschwindigkeit der Produkte 14, 14' auf zumindest den Produktzuführeinheiten 24, 26, und zwar der ersten Produktzuführeinheit 24 und zumindest der zweiten Produktzuführeinheit 26 und/oder in Abhängigkeit von einer Abführgeschwindigkeit der Produkte 14, 14' auf der Produktabführeinheit 30, die zumindest zwei Mover 16, 16', und zwar den ersten Mover 16 und zumindest den zweiten Mover 16' nach Abgabe des Produkts 14, 14' in/an die Produktabführeinheit 30 entweder zu der ersten Produktzuführeinheit 24 oder zu der zweiten Produktzuführeinheit 26 zurückzuführen und/oder zu bewegen. In dem Betrieb der Produkthandhabungsvorrichtung 12 werden der erste Durchlauf und zumindest der zweite Durchlauf zeitlich wiederkehrend wiederholt.

Ferner zeigt Figur 5 ein schematisches Verfahrensfließbild eines Verfahrens zur Handhabung, und zwar zur Förderung und/oder Sortierung von Produkten 14, 14', mittels einer Produkthandhabungsvorrichtung 12, und zwar der zuvor genannten Produkthandhabungsvorrichtung 12. Das Verfahren ist vorliegend anhand eines Verfahrensschritts 100 beschrieben. In dem Verfahrensschritt 100 werden zur Handhabung, und zwar zur Förderung und/oder Sortierung von Produkten 14, 14' zumindest zwei der Mover 16, 16' zu einer gemeinsamen Auflage 20 für zumindest das Produkt 14, 14' zusammengefasst. Die bereits oben genannten Beschreibungen und Ausführungen zur Handhabung von Produkten können ebenfalls auf das Verfahren übertragen und verfahrenstechnisch formuliert werden.

## Patentansprüche

1. Produkthandhabungsvorrichtung (12) zur Handhabung, insbesondere zur Förderung und/oder Sortierung, von Produkten (14, 14'), mit einer Vielzahl von Movern (16, 16'), mit einer Steuereinheit (18) zur Ansteuerung der Mover (16, 16') und mit einer Basiseinheit (52), die eine Ebene ausbildet, bezüglich welcher die Mover (16, 16') bewegbar angeordnet und/oder gelagert sind, wobei die Steuereinheit (18) dazu vorgesehen ist, in zumindest einem Betriebszustand zumindest zwei der Mover (16, 16') zu einer gemeinsamen Auflage (20) für zumindest ein Produkt (14, 14') zusammenzufassen, wobei die Steuereinheit (18) dazu vorgesehen ist, die zumindest zwei Mover (16, 16') in dem Betriebszustand von zumindest einer Produktzuführeinheit (24, 26) zu zumindest einer Produktabführeinheit (30) zu bewegen, **dadurch gekennzeichnet, dass** die Steuereinheit (18) dazu vorgesehen ist, eine Geschwindigkeit der zumindest zwei Mover (16, 16') bei Annäherung an die Produktabführeinheit (30) zu verändern, wobei mittels der Änderung der Geschwindigkeit der zumindest zwei Mover (16, 16') eine trägheitsbedingte Übergabe zumindest des Produkts (14, 14') von zumindest den zwei Movern (16, 16') an die Produktabführeinheit (30) realisierbar ist.

2. Produkthandhabungsvorrichtung (12) nach Anspruch 1, **dadurch gekennzeichnet, dass** die Steuereinheit (18) dazu vorgesehen ist, die zumindest zwei Mover (16, 16') in einem Bereich (70, 70') unterhalb der Produktzuführeinheit (24, 26) zusammenzufassen.

3. Produkthandhabungsvorrichtung (12) nach einem der vorhergehenden Ansprüche, **dadurch gekennzeichnet, dass** ein Bewegungsbereich (32) der zumindest zwei Mover (16, 16') überlappungsfrei mit der Produktabführeinheit (30) angeordnet ist.

4. Produkthandhabungsvorrichtung (12) nach einem der vorhergehenden Ansprüche, **dadurch gekennzeichnet, dass** die Steuereinheit (18) dazu vorgesehen ist, die zumindest zwei Mover (16, 16') zur Abgabe des Produkts (14, 14') voneinander weg zu bewegen.

5. Produkthandhabungsvorrichtung (12) nach einem der vorhergehenden Ansprüche, **dadurch gekennzeichnet, dass** die Steuereinheit (18) dazu vorgesehen ist, in zumindest einem weiteren Betriebszustand die Mover (16, 16') getrennt voneinander zu bewegen.

6. Produkthandhabungsvorrichtung (12) nach einem der vorhergehenden Ansprüche, **dadurch gekennzeichnet, dass** die Steuereinheit (18) dazu vorgesehen ist, in einem ersten Durchlauf einen ersten Mover (16) der zwei Mover (16, 16') von der Produktabführeinheit (30) zu einer ersten Produktzuführeinheit (24) und einen zweiten Mover (16') der zwei Mover (16, 16') zu einer zweiten Produktzuführeinheit (26) zu bewegen.

7. Produkthandhabungsvorrichtung (12) zumindest nach Anspruch 6,
**dadurch gekennzeichnet, dass** die Steuereinheit (18) dazu vorgesehen ist, in einem zweiten Durchlauf zumindest den ersten Mover (16) von der Produktabführeinheit (30) zu der zweiten Produktzuführeinheit (26) zu bewegen.

8. Produkthandhabungsvorrichtung (12) nach einem der vorhergehenden Ansprüche, **dadurch gekennzeichnet, dass** die zumindest zwei Mover (16, 16') jeweils zumindest eine Führungseinheit (36, 36') aufweisen, um bei Aufnahme des Produkts (14, 14') das Produkt (14, 14') zur Auflage (20) zu führen.

9. Produkthandhabungsvorrichtung (12) nach einem der vorhergehenden Ansprüche, **dadurch gekennzeichnet, dass** die zumindest zwei Mover (16, 16') jeweils zumindest eine Halteeinheit (38, 38') zur Halterung des Produkts (14, 14') innerhalb der Auflage (20) aufweisen.

10. Produkthandhabungsvorrichtung (12) nach einem der vorhergehenden Ansprüche, **dadurch gekennzeichnet, dass** eine Produktaufnahmeseite (56, 56') zumindest eines der zumindest zwei Mover (16, 16') entlang zumindest einer Symmetrieebene spiegelsymmetrisch ausgebildet ist.

11. Produkthandhabungssystem (10) zur Handhabung, insbesondere zur Förderung und/oder Sortierung, von Produkten (14, 14'), mit einer Produkthandhabungsvorrichtung (12) nach einem der vorhergehenden Ansprüche und mit zumindest einer Produktzuführeinheit (24, 26) und zumindest einer Produktabführeinheit (30).

12. Verpackungsmaschine (50) mit einem Produkthandhabungssystem (10) nach Anspruch 11.

13. Verfahren zur Handhabung, insbesondere zur Förderung und/oder Sortierung, von Produkten (14, 14'), mittels einer Produkthandhabungsvorrichtung (12) nach einem der Ansprüche 1 bis 10, welche eine Vielzahl von Movern (16, 16') aufweist, wobei zumindest zwei der Mover (16, 16') zu einer gemeinsamen Auflage (20) für zumindest ein Produkt (14, 14') zusammengefasst werden, **dadurch gekennzeichnet, dass** die Steuereinheit (18) eine Geschwindigkeit der zumindest zwei Mover (16, 16') bei Annäherung an die Produktabführeinheit (30) verändert, wobei mittels der Änderung der Geschwindigkeit der zumindest zwei Mover (16, 16') eine trägheitsbedingte Übergabe zumindest des Produkts (14, 14') von zumindest den zwei Movern (16, 16') an die Produktabführeinheit (30) realisiert wird.

## Claims

1. Product handling device (12) for handling, in particular for conveying and/or sorting, products (14, 14'), comprising a plurality of movers (16, 16'), comprising a control unit (18) for controlling the movers (16, 16') and comprising a base unit (52) which forms a plane with respect to which the movers (16, 16') are movably arranged and/or mounted, the control unit (18) being provided to combine at least two of the movers (16, 16') to form a common support (20) for at least one product (14, 14') in at least one operating state, the control unit (18) being provided to move the at least two movers (16, 16') from at least one product feed unit (24, 26) to at least one product discharge unit (30) in the operating state, **characterized in that** the control unit (18) is provided to change a speed of the at least two movers (16, 16') when approaching the product discharge unit (30), an inertia-related transfer of at least the product (14, 14') from at least the two movers (16, 16') to the product discharge unit (30) being realizable by means of the change in the speed of the at least two movers (16, 16').

2. Product handling device (12) according to claim 1, **characterized in that** the control unit (18) is provided to combine the at least two movers (16, 16') in a region (70, 70') below the product feed unit (24, 26).

3. Product handling device (12) according to any of the preceding claims, **characterized in that** a movement region (32) of the at least two movers (16, 16') is arranged without overlap with the product discharge unit (30).

4. Product handling device (12) according to any of the preceding claims, **characterized in that** the control unit (18) is provided to move the at least two movers (16, 16') away from each other for dispensing the product (14, 14').

5. Product handling device (12) according to any of the preceding claims, **characterized in that** the control unit (18) is provided to move the movers (16, 16') separately from one another in at least one further operating state.

6. Product handling device (12) according to any of the preceding claims, **characterized in that** the control unit (18) is provided, in a first pass, to move a first mover (16) of the two movers (16, 16') from the product discharge unit (30) to a first product feed unit (24), and a second mover (16') of the two movers (16, 16') to a second product feed unit (26).

7. Product handling device (12) at least according to claim 6,
**characterized in that** the control unit (18) is provided, in a second pass, to move at least the first mover (16) from the product discharge unit (30) to the second product feed unit (26).

8. Product handling device (12) according to any of the preceding claims, **characterized in that** the at least two movers (16, 16') each have at least one guide unit (36, 36') in order to guide the product (14, 14') to the support (20) when the product (14, 14') is received.

9. Product handling device (12) according to any of the preceding claims, **characterized in that** the at least two movers (16, 16') each have at least one holding unit (38, 38') for holding the product (14, 14') within the support (20).

10. Product handling device (12) according to any of the preceding claims,
**characterized in that** a product receiving side (56, 56') of at least one of the at least two movers (16, 16') is mirror-symmetrical along at least one plane of symmetry.

11. Product handling system (10) for handling, in particular for conveying and/or sorting, products (14, 14'), comprising a product handling device (12) according to any of the preceding claims and comprising at least one product feed unit (24, 26) and at least one product discharge unit (30).

12. Packaging machine (50) comprising a product handling system (10) according to claim 11.

13. Method for handling, in particular for conveying and/or sorting, products (14, 14') by means of a product handling device (12) according to any of claims 1 to 10, which has a plurality of movers (16, 16'), at least two of the movers (16, 16') being combined to form a common support (20) for at least one product (14, 14'), **characterized in that** the control unit (18) changes a speed of the at least two movers (16, 16') when approaching the product discharge unit (30), an inertia-related transfer of at least the product (14, 14') from at least the two movers (16, 16') to the product discharge unit (30) being realized by means of the change in the speed of the at least two movers (16, 16').

## Revendications

1. Dispositif de manipulation de produits (12) pour la manipulation, en particulier pour le transport et/ou le tri, de produits (14, 14'), comportant une pluralité de chariots (16, 16'), comportant une unité de commande (18) pour la commande des chariots (16, 16') et comportant une unité de base (52), qui forme un plan par rapport auquel les chariots (16, 16') sont disposés et/ou montés de manière mobile, dans lequel l'unité de commande (18) est prévue pour regrouper, dans au moins un état de fonctionnement, au moins deux des chariots (16, 16') en un support commun (20) pour au moins un produit (14, 14'), dans lequel l'unité de commande (18) est prévue pour déplacer les au moins deux chariots (16, 16') dans l'état de fonctionnement d'au moins une unité d'alimentation en produit (24, 26) vers au moins une unité d'évacuation de produits (30), **caractérisé en ce que** l'unité de commande (18) est prévue pour régler une vitesse des au moins deux chariots (16, 16') à l'approche de l'unité d'évacuation de produits (30), dans lequel la modification de la vitesse des au moins deux chariots (16, 16') permet de réaliser un transfert inertiel de l'au moins un produit (14, 14') des au moins deux chariots (16, 16') à l'unité d'évacuation de produits (30).

2. Dispositif de manipulation de produits (12) selon la revendication 1,
**caractérisé en ce que** l'unité de commande (18) est prévue pour regrouper les au moins deux chariots (16, 16') dans une zone (70, 70') sous l'unité d'alimentation en produit (24, 26).

3. Dispositif de manipulation de produits (12) selon l'une des revendications précédentes, **caractérisé en ce qu'\**une zone de déplacement (32) des au moins deux chariots (16, 16') est disposée sans chevauchement avec l'unité d'évacuation de produits (30).

4. Dispositif de manipulation de produits (12) selon l'une des revendications précédentes, **caractérisé en ce que** l'unité de commande (18) est prévue pour éloigner l'un de l'autre les au moins deux chariots (16, 16') pour la distribution du produit (14, 14').

5. Dispositif de manipulation de produits (12) selon l'une des revendications précédentes, **caractérisé en ce que** l'unité de commande (18) est prévue pour déplacer les chariots (16, 16') séparément l'un de l'autre dans au moins un autre état de fonctionnement.

6. Dispositif de manipulation de produits (12) selon l'une des revendications précédentes, **caractérisé en ce que** l'unité de commande (18) est prévue pour déplacer, lors d'un premier passage, un premier chariot (16) des deux chariots (16, 16') de l'unité d'évacuation de produits (30) vers une première unité d'alimentation en produit (24) et un second chariot (16') des deux chariots (16, 16') vers une seconde unité d'alimentation en produit (26).

7. Dispositif de manipulation de produits (12) au moins selon la revendication 6,
**caractérisé en ce que** l'unité de commande (18) est prévue pour déplacer au moins le premier chariot (16) de l'unité d'évacuation de produits (30) à la seconde unité d'alimentation de produits (26) lors d'un second passage.

8. Dispositif de manipulation de produits (12) selon l'une des revendications précédentes, **caractérisé en ce que** les au moins deux chariots (16, 16') présentent respectivement au moins une unité de guidage (36, 36') pour guider le produit (14, 14') vers le support (20) lors de la réception du produit (14, 14').

9. Dispositif de manipulation de produits (12) selon l'une des revendications précédentes, **caractérisé en ce que** les au moins deux chariots (16, 16') présentent respectivement au moins une unité de maintien (38, 38') pour le maintien du produit (14, 14') à l'intérieur du support (20).

10. Dispositif de manipulation de produits (12) selon l'une des revendications précédentes, **caractérisé en ce qu'**un côté de réception de produits (56, 56') d'au moins l'un des au moins deux chariots (16, 16') est réalisé avec une symétrie spéculaire le long d'au moins un plan de symétrie.

11. Système de manipulation de produits (10) pour la manipulation, en particulier pour le transport et/ou le tri, de produits (14, 14'), comportant un dispositif de manipulation de produits (12) selon l'une des revendications précédentes et comportant au moins une unité d'alimentation en produit (24, 26) et au moins une unité d'évacuation de produits (30).

12. Machine d'emballage (50) comportant un système de manipulation de produits (10) selon la revendication 11.

13. Procédé pour la manipulation, en particulier pour le transport et/ou le tri, de produits (14, 14'), à l'aide d'un dispositif de manipulation de produits (12) selon l'une des revendications 1 à 10, qui présente une pluralité de chariots (16, 16'), dans lequel au moins deux des chariots (16, 16') sont regroupés en un support commun (20) pour au moins un produit (14, 14'), **caractérisé en ce que** l'unité de commande (18) modifie une vitesse des au moins deux chariots (16, 16') à l'approche de l'unité d'évacuation de produit (30), dans lequel un transfert inertiel de l'au moins au produit (14, 14') des au moins deux chariots (16, 16') à l'unité d'évacuation de produit (30) est effectué à l'aide de la modification de la vitesse des au moins deux chariots (16, 16').
